# DEMANDE DE BREVET EUROPEEN

(11) **EP 3 118 514 A1**
(43) Date de publication de la demande: **18.01.2017**
(21) Numéro de dépôt: 15177375.1
(22) Date de dépôt: 17.07.2015
(51) Int. Cl.: F21S 8/02, F21V 23/06, F21V 21/04, H01R 13/625, H01R 33/46, H02G 3/20, F21V 21/03

(54) **CONNECTEUR POUR DISPOSITIFS ELECTRIQUES**

(71) Demandeur: Finkbeiner, Jacques, 1944 Le Fouly (CH); Heiniger, Sonia, 1752 Villars sur Glane (CH); Cosandey, Johan, 1004 Lausanne (CH)
(72) Inventeur: Humbert, Charles, 1773 Lechelles (CH); Heiniger, Sonia, 1752 Villars sur Glâne (CH); Cosandey, Johan, 1004 Lausanne (CH)
(74) Mandataire: Ravenel, Thierry Gérard Louis

(57) **Abrégé**

L'invention se rapporte à un dispositif de connexion rapide, le dispositif comprenant :
- une prise femelle formant une boîte électrique, la prise femelle comprenant une cavité recevant un premier connecteur électrique relié à un réseau électrique,
- une prise mâle comprenant un second connecteur électrique et présentant une forme complémentaire à la cavité de la prise femelle, la prise mâle pouvant passer d'une position déverrouillée dans laquelle la prise mâle peut être insérée dans la prise femelle, vers une position verrouillée dans laquelle la prise mâle est solidaire de la prise femelle et le second connecteur électrique coopère avec le premier connecteur électrique,
- un conducteur électrique s'étendant au travers de la prise mâle,

Selon l'invention, le second connecteur électrique comprend des moyens agencés pour reprendre le poids du dispositif électrique.

## Description

### Domaine de l'invention

L'invention se rapporte aux appareils électriques, et plus particulièrement aux connecteurs permettant d'installer un dispositif électrique au plafond ou sur un mur.

### Arrière-plan de l'invention

Il est connu du document GB 2 435 722 un connecteur électrique permettant de fixer et relier rapidement un dispositif électrique à un réseau électrique au niveau d'un plafond. Le connecteur électrique est fixé dans une boite électrique au moyen d'un système à baïonnette.

Un tel dispositif présente l'inconvénient d'avoir une mise en place compliquée. En effet, le connecteur nécessite d'abord de relier le dispositif électrique au connecteur par le biais d'une borne de connexion électrique. De plus, un tel connecteur possède des fiches de connexion fixées par le biais de vis et ne permettent donc pas d'assurer une connexion électrique fiable au fil du temps et des installations/désinstallations de dispositifs électriques tels que des luminaires.

### Résumé de l'invention

L'invention a notamment pour objectif de pallier les différents inconvénients de ces techniques connues.

Plus précisément, un objectif de l'invention est de fournir un connecteur qui soit simple et peu coûteux à mettre en oeuvre.

Ces objectifs, ainsi que d'autres qui apparaîtront plus clairement par la suite, sont atteints selon l'invention à l'aide d'un dispositif de connexion rapide, le dispositif comprenant :
- une prise femelle formant une boîte électrique destinée à être installée dans un support mural, la prise femelle comprenant une cavité recevant un premier connecteur électrique destiné à être relié au moins indirectement à un réseau électrique,
- une prise mâle comprenant un second connecteur électrique et présentant une forme complémentaire à la cavité de la prise femelle, configurée pour venir en prise de manière amovible dans la partie femelle, la prise mâle pouvant passer d'une position déverrouillée dans laquelle la prise mâle peut être insérée dans la prise femelle, vers une position verrouillée dans laquelle la prise mâle est solidaire de la prise femelle et le second connecteur électrique coopère avec le premier connecteur électrique,
- un conducteur électrique comprenant une première extrémité reliée au second connecteur électrique, et une autre extrémité configurée pour être connectée à un dispositif électrique, le conducteur électrique s'étendant au travers de la prise mâle.

Selon l'invention, le second connecteur électrique comprend des moyens agencés pour reprendre le poids du dispositif électrique.

L'invention concerne également un dispositif de connexion comprenant :
- une prise femelle destinée à être installée dans un plafond, la prise femelle comprenant une cavité présentant un fond recevant un premier connecteur électrique destiné à être relié au moins indirectement à un réseau électrique,
- une prise mâle comprenant un second connecteur électrique et présentant une forme complémentaire à la cavité de la prise femelle, configurée pour venir en prise de manière amovible dans la partie femelle, la prise mâle pouvant passer d'une position déverrouillée dans laquelle la prise mâle peut être insérée dans la prise femelle, vers une position verrouillée dans laquelle la prise mâle est solidaire de la prise femelle et le second connecteur électrique coopère axialement avec le premier connecteur électrique,
- un conducteur électrique comprenant une première extrémité reliée au second connecteur électrique, et une autre extrémité configurée pour être connectée à un dispositif électrique, le conducteur électrique s'étendant au travers de la prise mâle,

Selon l'invention, la prise mâle est monobloc et présente une forme en T, le corps du T étant de forme cylindrique et la tête du T présentant une forme sensiblement oblongue.

Conformément à d'autres variantes avantageuses de l'invention :
- le second connecteur électrique est disposé sur le dessus de la tête du T de la prise mâle ;
- le second connecteur électrique est disposé sur l'un des côtés de la tête du T de la prise mâle ;
- la prise mâle (20) et le conducteur électrique (40) sont deux éléments distincts, le conducteur électrique (40) étant emboité dans la prise mâle (20) ;
- les moyens pour reprendre le poids du dispositif électrique comprennent un logement ménagé dans la prise mâle et configuré pour recevoir le second connecteur électrique, le logement comprenant un épaulement agencé pour reprendre le poids du dispositif électrique ;
- le second connecteur électrique présente une forme complémentaire de l'épaulement, de manière que le second connecteur électrique appuie sur l'épaulement du logement et reprenne le poids du dispositif électrique ;
- le second connecteur électrique est affleurant avec la surface de la prise mâle de manière que le second connecteur électrique est maintenu en contact avec le premier connecteur électrique lorsque la prise mâle est en position verrouillée ;
- le second connecteur électrique et le conducteur électrique forment un élément monobloc ;
- le second connecteur électrique est libre en rotation au sein du logement ;
- le dispositif comprend des moyens pour mettre en prise la partie mâle dans la partie femelle, tel qu'un système de fixation à baïonnette ;
- la cavité de la prise femelle comprend des moyens de blocage de la prise mâle dans la prise femelle en position verrouillée ;
- la prise mâle, la prise femelle sont réalisés en matière plastique et le second connecteur électrique est réalisé en caoutchouc vulcanisé ;
- la partie femelle comprend au moins un dispositif électronique relié au réseau électrique indépendamment du premier connecteur électrique ;
- la partie femelle comprend au moins un logement configuré pour recevoir le dispositif électronique ;
- le dispositif électronique est un moyen de communication sans fil ;
- le dispositif électronique est un détecteur de fumées.

L'invention concerne aussi un boîtier d'encastrement comprenant :
- un corps présentant un fond ;
- des voiles pour le passage des câbles, disposés à proximité du fond,
- des rainures, formées sur la paroi extérieure du corps, pour rigidifier le boîtier d'encastrement.

L'invention concerne aussi un ensemble comprenant :
- un boîtier d'encastrement destiné à être fixé à demeure dans un support, le boitier d'encastrement comprenant :
- un corps présentant un fond,
- des voiles pour le passage de câbles électriques, disposés à proximité du fond,
- des nervures, formées sur la paroi extérieure du corps, pour rigidifier le boîtier d'encastrement,
- des moyens de blocage et de réglage, formés sur la face interne du corps, et configurés pour coopérer avec la prise femelle,
- une prise femelle comprenant des rainures formées sur sa paroi extérieure, agencées pour coopérer avec les moyens de blocage et de réglage du boîtier d'encastrement de manière à régler la position de la prise femelle par rapport au boîtier d'encastrement.

Conformément à d'autres variantes avantageuses de l'invention :
- les rainures coopèrent avec les moyens de blocage du boîtier d'encastrement de manière à maintenir en position la prise femelle par rapport au boîtier d'encastrement ;
- les moyens de blocage comprennent au moins une protubérance configurée pour coopérer avec la prise femelle du dispositif de connexion ;
- les moyens de réglage comprennent des rainures périphériques formées sur la face interne de la paroi latérale, destinées à coopérer avec la prise femelle du dispositif de connexion.

L'invention concerne également un kit de montage pour connecter un dispositif électrique sur un dispositif de connexion, comprenant un boîtier d'encastrement destiné à être fixé à demeure dans un support mural, une prise femelle destinée à être installée dans le boîtier d'encastrement, la prise femelle comprenant un premier connecteur électrique destiné à être relié au réseau électrique, une prise mâle comprenant un second connecteur électrique et adaptée pour coopérer avec la prise femelle de façon que le second connecteur électrique coopère avec le premier connecteur électrique, et un conducteur électrique comprenant une première extrémité reliée au second connecteur électrique, et une autre extrémité configurée pour être connectée à un dispositif électrique, le conducteur électrique s'étendant au travers de la prise mâle.

Le kit de montage selon l'invention comprend un dispositif électrique pouvant être, par exemple, un luminaire ou un ventilateur.

L'invention concerne aussi un procédé de montage d'un kit de montage conforme à l'invention, le procédé comprenant les étapes suivantes :
- placer le boîtier d'encastrement ;
- couler la dalle de béton formant le plafond ;
- tirer les fils électriques au travers du boîtier d'encastrement ;
- brancher le premier connecteur de la prise femelle aux fils électriques ;
- insérer et bloquer la prise femelle dans le boîtier d'encastrement ;
- insérer et verrouiller la prise mâle dans la prise femelle de manière à faire coopérer les premier et second connecteurs électriques.

### Description sommaire des dessins

D'autres particularités et avantages ressortiront clairement de la description qui en est faite ci-après, à titre indicatif et nullement limitatif, en référence aux dessins annexés, dans lesquels :
- les figures 1a et 1b sont respectivement des vues en perspective d'une prise femelle et d'une prise mâle d'un dispositif de connexion conforme à l'invention ;
- la figure 1c est une vue en perspective d'une prise femelle montrant schématiquement en pointillés de la configuration de la cavité intérieure de celle-ci
- la figure 2a est une vue en coupe d'une prise femelle conforme à l'invention ;
- les figures 2b et 2c sont des vues en coupe d'une prise mâle selon un premier et un deuxième mode de réalisation de l'invention ;
- les figures 3a à 3c sont des vues en coupe d'un boîtier d'encastrement conforme à l'invention ;

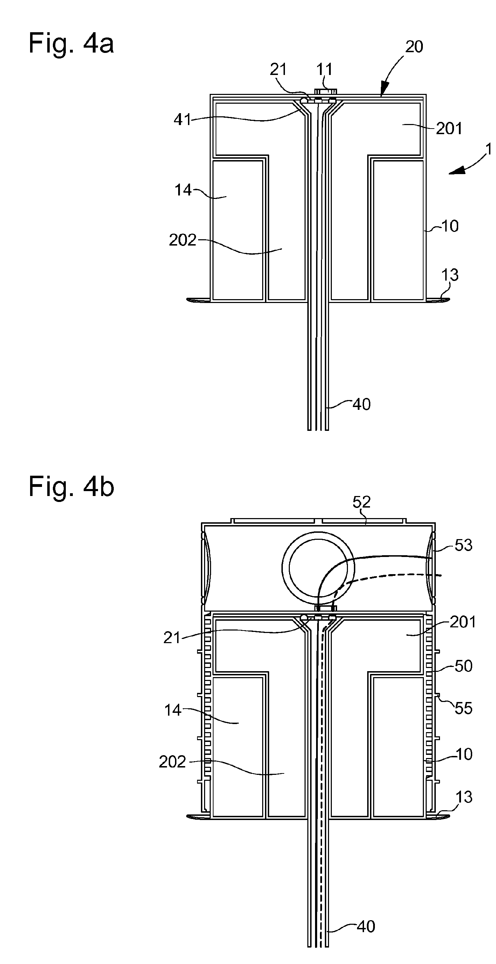

- les figures 4a et 4b sont respectivement des vues en coupe d'une prise mâle logée dans la prise femelle et d'un ensemble prise mâle/prise femelle solidarisé dans un boîtier d'encastrement ;
- les figures 5a à 5f illustrent un procédé de pose d'un kit conforme à l'invention ;
- les figures 6a et 6b sont respectivement des vues en coupe d'un kit conforme à l'invention installé dans un plafond et d'un kit conforme à l'invention installé dans un faux plafond.

### Description détaillée des modes de réalisation préférés

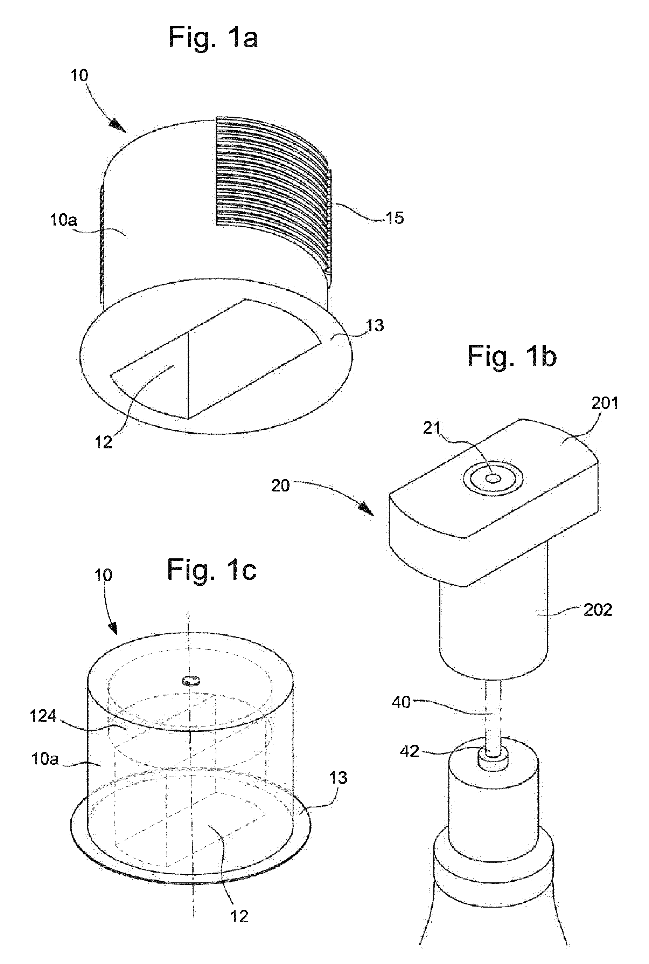

Un dispositif de connexion selon un mode de réalisation de l'invention va maintenant être décrit dans ce qui suit faisant référence conjointement aux figures 1a, 1b, 1 c, 2a à 2c, 3a à 3c, 4a, 4b, 6a et 6b.

Dans ce qui suit, on entend par support mural, tant les murs, que les plafonds ou les planchers ou toutes autres parois.

L'invention concerne un dispositif 1 de connexion comprenant :
- une prise femelle 10 destinée à être installée dans un support mural, la prise femelle 10 comprenant une cavité 12 présentant un fond 120 recevant un premier connecteur électrique 11 destiné à être relié au moins indirectement à un réseau électrique,
- une prise mâle 20, ayant ici la forme générale d'un T, comprenant un second connecteur électrique 21 et présentant une forme complémentaire à la cavité 12 de la prise femelle, configurée pour venir en prise de manière amovible dans la partie femelle 10, la prise mâle 20 pouvant passer d'une position déverrouillée dans laquelle la prise mâle 20 peut être insérée dans la prise femelle 10, vers une position verrouillée dans laquelle la prise mâle 20 est solidaire de la prise femelle 10 - par l'intermédiaire des branches du T reposant sur une surface complémentaire prévue dans la cavité 12 à la façon d'un dispositif de fixation à baïonnette - et le second connecteur électrique 21 coopère axialement avec le premier connecteur électrique 11,
- un conducteur électrique 40 comprenant une première extrémité 41 reliée au second connecteur électrique 21, et une autre extrémité 42 configurée pour être connectée à un dispositif électrique, le conducteur électrique s'étendant au travers de la prise mâle 20.

Selon un aspect particulièrement avantageux de l'invention, le second connecteur électrique 21 comprend des moyens agencés pour reprendre le poids du dispositif électrique.

Le dispositif selon l'invention comprend deux pièces principales, à savoir une prise femelle 10 prévue pour être fixée à demeure dans un plafond 71 prévu à cet effet, et une prise mâle 20 prévue pour être solidaire et connectée électriquement au dispositif électrique.

La prise femelle 10 peut être installée, préférentiellement par un professionnel du bâtiment, idéalement lors de la construction de l'habitation, par exemple en coulant le plafond 71 autour d'un gabarit aux dimensions adéquates. Une fois le gabarit retiré, la prise femelle 10 peut être installée dans la cavité, le premier connecteur électrique 11 étant relié électriquement au réseau électrique de l'habitation.

Plus précisément, et telle qu'illustrée sur les figures, la prise femelle 10 se présente sous la forme d'un cylindre présentant une cavité 12 sensiblement parallélépipédique, centrée autour d'un axe A confondu avec l'axe de révolution formant le cylindre. La cavité 12 s'étend sur toute ou partie de la hauteur de la prise femelle 10 et est munie d'une entrée 121 au niveau de la face inférieure de la prise femelle 10. Avantageusement, le fond 120 peut être percé à proximité du centre pour permettre le passage du premier connecteur électrique 11, destiné à être reliée au réseau électrique. Le premier connecteur électrique 11 est monté solidaire sur le fond 120, par exemple par vissage ou bien par chassage et collage.

La prise femelle 10 comporte une enveloppe extérieure cylindrique 10a terminée à sa base proche de l'ouverture de la cavité 12 par une collerette d'appui 13 configurée pour appuyer contre le plafond 71 et cacher la partie périphérique se trouvant autour de la prise femelle 10. L'enveloppe extérieure 10a comporte en outre une série de rainures 15 s'étendant autour de la périphérie de l'enveloppe et espacées les unes des autres selon l'axe A. Les rainures 15 permettent d'une part de rigidifier l'enveloppe extérieure 10a, et d'autre part, de servir d'organes d'ancrage permettant de maintenir l'enveloppe extérieure 10a dans la dalle béton dans laquelle la prise femelle sera disposée.

Dans l'exemple ces rainures sont interrompues le long de la circonférence de l'enveloppe, mais pourraient, selon une variante non représentée, s'étendre de manière continue autour de l'enveloppe. De préférence, ces rainures s'étendent selon une hélice à la surface de ladite enveloppe extérieure 10a. Le nombres de rainures et leur hauteur est variable et dépend notamment du poids du luminaire destiné à être connecté au dispositif de l'invention. Dans une variante de réalisation de la prise femelle 10 les rainures 15 peuvent être totalement omises ou remplacées par exemple par une collerette s'étendant à partir de l'enveloppe 10a au voisinage du premier connecteur électrique 11.

Selon une variante de réalisation de l'invention, la partie femelle 10 peut présenter au moins une réservation 14 configurée pour recevoir un dispositif électronique relié au réseau électrique indépendamment du premier connecteur électrique 11. On peut par exemple imaginer que le dispositif électronique est un moyen de communication sans fil, tel qu'un module wifi ou bien LTE, on peut également imaginer que ce dispositif électronique consiste en un détecteur de fumées.

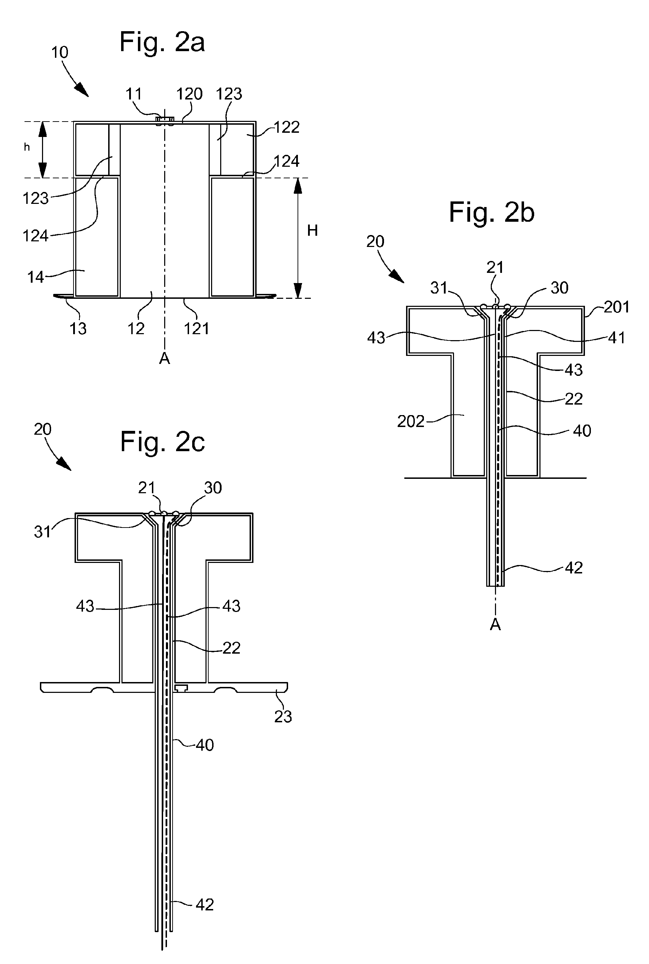

Comme on peut l'observer sur la vue 1c en liaison avec la vue en coupe de la figure 2a dans lesquelles les rainures 15 ont été non représentées, la cavité de la prise femelle 10 débouche sur un évidement 122 cylindrique de diamètre D, centré autour de l'axe A, dont le fond est confondu avec le fond 120 de la prise femelle 10. La cavité 12 est configurée pour guider la partie mâle 20 dans la partie femelle 10 jusqu'à l'évidement 122 cylindrique.

La prise mâle 20, visible notamment aux figures 1a et 2b, comprend une première portion, dite tête 201 de la prise mâle 20, sensiblement parallélépipédique, et donc de forme similaire à la cavité 12, et une deuxième portion, dite corps 202 de la prise mâle 20, de forme cylindrique.

Selon un mode de réalisation particulier de l'invention, la prise mâle 20 est monobloc et se présente sous la forme d'un T, le corps du T étant de forme cylindrique et la tête du T étant de forme sensiblement oblongue.

Selon ce mode de réalisation, le second connecteur électrique 21 peut être disposé sur le dessus ou bien l'un des côtés de la tête du T de la prise mâle 20.

Avantageusement, la hauteur du corps 202 de la prise mâle est sensiblement identique à la hauteur H de la cavité 12, et la hauteur de la tête 201 de la prise mâle 20 est sensiblement identique à la hauteur h de l'évidement 122.

La tête 201 de la prise mâle 20 forme un premier organe d'accrochage à baïonnette, le deuxième organe d'accrochage étant formé par l'évidement 122. Dans le mode de réalisation illustré sur les figures, la prise mâle 20 peut s'engager à l'intérieur de la cavité 12 de la prise femelle 10. La tête 201 de la prise mâle 20, présente des dimensions proches de celles de la cavité 12 de manière à laisser un léger jeu entre les deux, afin d'insérer aisément la prise mâle 20 dans la prise femelle 10.

La prise mâle 20 est montée à rotation dans la prise femelle 10 une fois que la tête 201 est entrée en butée contre le fond 120. La tête 201 repose alors contre les bords inférieurs 124 de l'évidement 122, empêchant la prise mâle 20 de sortir de la prise femelle 10. Comme on peut l'observer sur la vue en coupe à la figure 2b, la tête 201 de la prise mâle 20 comprend un second connecteur électrique 21 configuré pour coopérer axialement avec le premier connecteur électrique 11.

Selon un mode de réalisation préférentiel de l'invention, l'évidement 122 comprend sur sa paroi latérale des protubérances 123 matérialisant une butée indiquant que la rotation de la prise mâle 20 est suffisante pour assurer un maintien sûr dans la prise femelle 10. Les protubérances 123 peuvent être agencés à 180° l'une de l'autre, mais d'autres dispositions sont possibles, pour autoriser plusieurs positions de la prise mâle 20 par rapport à la prise femelle 10.

La prise mâle 20 et le conducteur électrique 40 sont deux éléments distincts, le conducteur électrique 40 étant emboité dans la prise mâle 20, de manière à simplifier la fabrication et le montage du dispositif 1.

Pour monter le second connecteur électrique 21 à la prise mâle 20, le second connecteur est dans un premier temps connecté au conducteur électrique 40, puis le conducteur électrique 40 est introduit par emboitement dans un canal 22 qui traverse la prise mâle 20 sur toute sa hauteur, jusqu'à ce que le second connecteur électrique 21 vienne en butée contre la prise mâle 20.

Ainsi, pour assembler la prise mâle 20 à la prise femelle 10, on introduit la tête 201 de la prise mâle dans la cavité 12 de la prise femelle 10, en la faisant coulisser jusqu'au fond 120 de la prise femelle 10, puis en tournant la prise mâle 20 dans l'évidement 122 pour faire entrer la tête 201 en butée contre les protubérances 123.

La prise mâle peut donc passer d'une position déverrouillée dans laquelle la prise mâle 20 peut être insérée dans la prise femelle 10, vers une position verrouillée dans laquelle la prise mâle 20 est solidaire de la prise femelle 10 et le second connecteur électrique 21 coopère axialement avec le premier connecteur électrique 11. Un tel mécanisme permet un montage aisé et rapide d'un dispositif électrique au plafond.

Selon une variante de l'invention, la prise femelle 10 comprend des moyens de blocage de la prise mâle 20 dans la prise femelle 10 en position verrouillée. Ces moyens de blocage peuvent, par exemple, comprendre des ergots sur la paroi de l'évidement 122 à proximité des protubérances 123, de manière à créer une force de frottement suffisante pour maintenir en place la prise mâle 20 dans la prise femelle 10.

De manière avantageuse, la prise mâle 20 est solidaire d'un dispositif électrique à installer. Les figures 2b et 2c illustrent une prise mâle 20 recevant le second connecteur électrique 21, et un conducteur électrique 40 recevant au moins deux câbles électriques 43. Le conducteur électrique 40 présente une première extrémité 41 reliée au second connecteur électrique 21, et une autre extrémité 42 configurée pour être connectée à un dispositif électrique, le conducteur électrique s'étendant au travers de la prise mâle 20 par le biais du canal 22. Le canal 22 présente de préférence une section circulaire, s'étend sur toute ou partie de la hauteur de la partie mâle 20 et est centré sur l'axe A.

L'assemblage du conducteur électrique 4 et de la prise mâle 20 se fait, de préférence, par le fabricant du dispositif électrique, afin de simplifier au maximum le travail à effectuer par l'utilisateur final. Le cas échéant, comme illustré à la figure 2c, la prise mâle 20 peut comprendre une assiette de fixation 23 pourvue d'orifices afin de permettre le montage de tout type de luminaires de type applique par exemple, ou encore de lampes à suspension.

Selon l'invention, la prise mâle 20 comprend des moyens pour reprendre le poids du dispositif électrique lorsque la prise mâle est solidaire de la prise femelle. Ces moyens comprennent un logement 30 ménagé dans la prise mâle 20 et configuré pour recevoir le second connecteur électrique 21, le logement 30 comprenant un épaulement 31 agencé pour reprendre le poids du dispositif électrique lorsque le dispositif est monté.

Plus précisément, et tel qu'illustré à la figure 2b, le logement 30 est ménagé dans la tête 201 de la prise mâle 20, préférentiellement au centre de la prise mâle, de manière que les premier et second connecteurs électriques 11 et 21 sont alignés sur le même axe A, le canal 22 débouchant sur le logement 30. Tel que représenté sur les figures, le logement 30 est de forme conique et l'épaulement 31 est formé par la paroi oblique du logement 30. Bien évidemment, d'autres formes de logement peuvent être mise en place, par exemple parallélépipédique ou circulaire, avec des dimensions supérieures au diamètre du canal 22 par lequel passe le conducteur électrique 4.

Selon un aspect particulièrement avantageux de l'invention, le second connecteur électrique 21 présente une forme complémentaire de l'épaulement 31, de manière que le second connecteur électrique 21 appuie sur l'épaulement 31 du logement 30 et reprenne le poids du dispositif électrique. Le second connecteur électrique 21 peut être disposé libre en rotation autour de l'axe A au sein du logement 30 de manière à faciliter la rotation du dispositif électrique relié second au connecteur électrique 21 par le biais du conducteur électrique 40.

Tel que représenté sur les figures, le second connecteur électrique 21 est affleurant avec la surface de la prise mâle 20 de manière que le second connecteur électrique 21 est maintenu en contact avec le premier connecteur électrique 11 lorsque la prise mâle 20 est en position verrouillée.

Les connecteurs électriques 11 et 21 peuvent présenter, chacun, deux fiches de contact, ces fiches de contact pouvant être matérialisées par des lames ressort afin de combler un éventuel jeu entre la prise mâle 20 et la prise femelle 10.

Selon un aspect particulier de l'invention, le second connecteur électrique 21 et le conducteur électrique 40 peuvent former un élément monobloc, les câbles électriques 43 étant connectés au second connecteur électrique 21 et le tout étant ensuite recouvert d'une gaine par exemple.

La prise mâle 20, la prise femelle 10 et le second connecteur électrique 21 peuvent être réalisés en caoutchouc vulcanisé de manière à augmenter leur résistance à la traction et ainsi augmenter la durée de vie du dispositif.

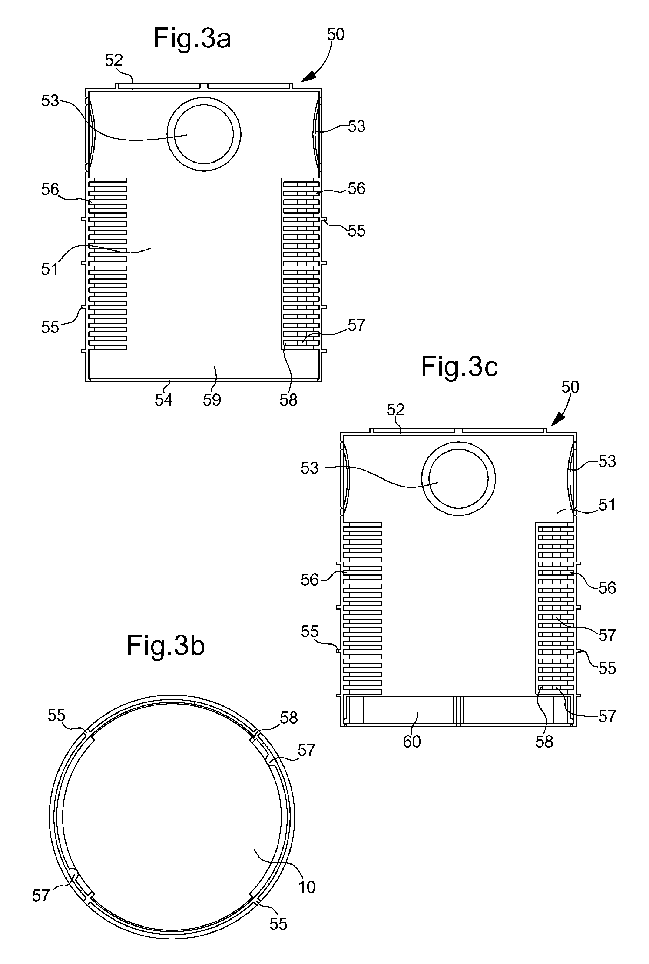

L'invention concerne aussi un boîtier d'encastrement 50 illustré aux figures 3a et 3b. Le boîtier d'encastrement 50 est formé par un corps 51 en matière plastique moulée présentant une section cylindrique, avec un fond 52, et des voiles 53 fracturables, à proximité du fond 52, pour le passage de conducteurs ou câbles électriques. Un rebord 54 annulaire est agencé à l'opposé du fond 52 et délimite le pourtour circonférentiel de l'ouverture 59 à travers laquelle sera engagée la prise femelle 10.

Le boîtier 50 comprend également des nervures 55, formées sur la paroi extérieure du corps 51, d'une part pour rigidifier le boîtier d'encastrement 50, et d'autre part, pour servir d'organes d'ancrage permettant de maintenir le boîtier 50 dans la dalle béton dans laquelle il sera disposé.

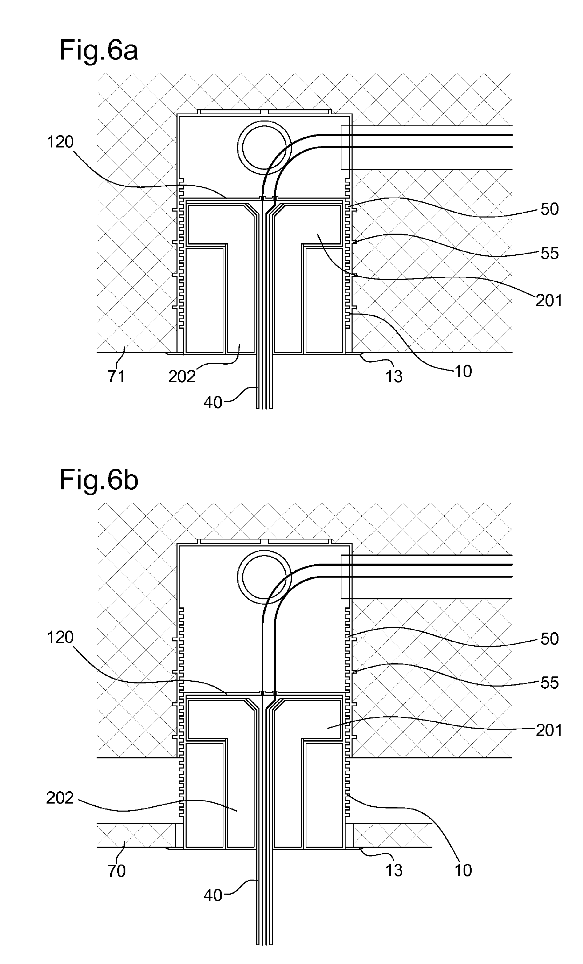

Selon un aspect particulier de l'invention, le boîtier d'encastrement 50 comprend sur la face interne du corps 51, des moyens de blocage et de réglage du dispositif de connexion précédemment décrit. Les moyens de blocage et de réglage permettent de régler la position de la prise femelle 10 dans le boîtier d'encastrement 50 de manière que la prise femelle 10 soit affleurante avec la surface du plafond 71, comme illustré à la figure 6a.

Plus précisément, les moyens de réglage sont formés par des rainures 56 sur la face interne du corps 51 du boîtier d'encastrement 50. Selon un mode de réalisation de l'invention, les rainures 56 s'étendent sur toute ou partie de la hauteur du boîtier d'encastrement 50, et se présente sous la forme d'au moins deux ensembles décalés angulairement de 90° l'un de l'autre de manière que les deux ensembles sont l'un en face de l'autre et occupent chacun un quart de la surface disponible.

Le nombre de rainures 56 peut varier en fonction des besoins de l'homme du métier, la face interne du corps 51 comprenant au moins deux rainures pour pouvoir bloquer la prise femelle 10. La distance entre chaque rainure 56 peut également être variable et est de préférence comprise entre 1 et 5 mm.

Ces ensembles de rainures 56 sont configurés pour coopérer par vissage avec la prise femelle 10. A cet effet, la prise femelle 10 présente également, sur sa paroi extérieure deux autres ensembles de rainures 15 correspondants comme cela ressort notamment de la figure 1 a.

Les moyens de blocage comprennent au moins une protubérance 57 formée entre chaque rainure 56, chaque protubérance 57 étant configurée pour coopérer avec la prise femelle 10 du dispositif d'encastrement et la bloquer, éventuellement définitivement, dans le boîtier d'encastrement 50.

Le boîtier d'encastrement 50 peut également présenter des moyens de butée 58 à proximité de chaque protubérance 57, de manière à limiter la rotation de la prise femelle 10 dans le boîtier d'encastrement 50.

Tel qu'illustré à la figure 3c, le boîtier d'encastrement 50 peut être équipé d'un couvercle 60 pour obturer l'ouverture 59 et servir de pièce de fixation pour maintenir en place le boîtier d'encastrement 50 lors de la fabrication de la dalle de béton formant le plafond 71.

Ainsi, pour assembler la prise femelle 10 au boîtier d'encastrement 50, on introduit la prise femelle 10 dans le boîtier d'encastrement 50, en la faisant coulisser jusqu'à ce que le rebord 54 annulaire soit affleurant avec le plafond, puis en tournant la prise femelle 10 d'un quart de tour pour faire coopérer les ensembles de rainures 56 du boîtier d'encastrement 50 avec les autres ensembles de rainures 15 de la prise femelle 10. En bout de course de la rotation, l'opérateur doit forcer pour que chaque protubérance 57 exerce une force de frottement suffisante pour empêcher la désolidarisation de la prise femelle 10 du boîtier d'encastrement 50.

L'invention concerne aussi un kit de montage pour connecter un dispositif électrique sur un dispositif de connexion, comprenant un boîtier d'encastrement 50 destiné à être fixé à demeure dans un plafond, une prise femelle 10 destinée à être installée dans le boîtier d'encastrement, la prise femelle 10 comprenant un premier connecteur électrique 11 destiné à être relié au réseau électrique, une prise mâle 20 comprenant un second connecteur électrique 21 et adaptée pour coopérer avec la prise femelle 10 de façon que le second connecteur électrique 21 coopère avec le premier connecteur électrique 11, et un conducteur électrique 40 comprenant une première extrémité 41 reliée au second connecteur électrique 21, et une autre extrémité 42 configurée pour être connectée à un dispositif électrique, le conducteur électrique s'étendant au travers de la prise mâle 20.

Un tel kit conforme à l'invention permet de rendre la mise en place d'un dispositif électrique au plafond de manière particulièrement simple et rapide.

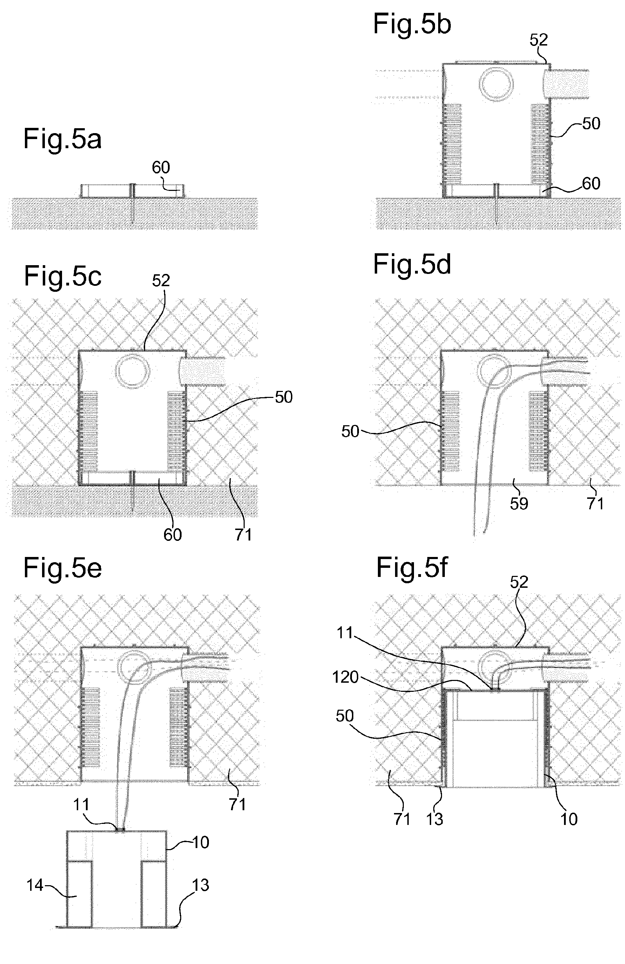

En effet, le kit conforme à l'invention permet de mettre en oeuvre un procédé de montage particulièrement simple, illustré aux figures 5a à 5f.

Le montage du kit est réalisé comme suit :
- un électricien fixe le couvercle 60 sur le coffrage formant la dalle de béton, à l'aide d'un clou par exemple ;
- le boîtier d'encastrement 50 est ensuite clipsé sur le couvercle 60 et des gaines électriques sont installées de manière hermétique au travers des voiles 53 fracturables ;
- la dalle de béton formant le plafond est coulée ;
- le coffrage est retiré une fois que la dalle de béton est sèche ;
- l'électricien tire les fils électriques au travers du boîtier d'encastrement 50 ;
- l'électricien branche ensuite le premier connecteur 11 de la prise femelle 10 aux fils électriques ;
- enfin, l'électricien insère et bloque la prise femelle 10 dans le boîtier d'encastrement 50 de manière que la collerette d'appui 13 appuie contre le plafond 71.

Pour finir, une personne telle que l'occupant du logement peut venir insérer et verrouiller la prise mâle 20 dans la prise femelle 10 de manière à faire coopérer les premier et second connecteurs électriques 11 et 21 et établir une connexion électrique pour alimenter le dispositif électrique sans avoir à utiliser d'outils.

Dans le cas où la fixation du couvercle 60 doit être sûre et robuste, l'électricien peut fixer le couvercle 60 sur le coffrage à l'aide de plusieurs clous et ainsi obtenir un meilleur maintien du couvercle 60.

Comme on peut l'observer à la figure 6b, un tel kit peut aussi être utilisé avec un faux plafond 70, la position de la prise femelle 10 dans le boîtier d'encastrement 50 pouvant être réglée aisément pour que la prise femelle 10 soit affleurante avec le faux plafond 70.

Grâce à ces différents aspects de l'invention, on dispose d'un kit de conception simple permettant d'installer aisément un dispositif électrique tel qu'un luminaire d'intérieur ou encore un ventilateur. Bien évidemment, d'autres dispositifs électriques peuvent être installés par le biais du kit conforme à l'invention.

Bien entendu, la présente invention ne se limite pas à l'exemple illustré et est susceptible de diverses variantes et modifications qui apparaîtront à l'homme de l'art. Ainsi, la prise mâle 20 et la prise femelle 10 peuvent être interverties, la prise mâle 20 se fixant dans un support mural, et la prise femelle 10 étant fixée de manière amovible à la prise mâle 20.

### NOMENCLATURE

- 1. Dispositif de connexion,: 40. Conducteur électrique,
- 10. Prise femelle,: 41. Première extrémité du
- 10a. Enveloppe extérieure,: conducteur,
- 11. Premier connecteur électrique,: 42. Seconde extrémité du
- 12. Cavité,: conducteur,
- 120. Fond de la prise femelle,: 43. Fils électriques,
- 121. Entrée de la cavité,: 50. Boîtier d'encastrement,
- 122. Evidement,: 51. Corps du boîtier,
- 123. Protubérances,: 52. Fond du boîtier,
- 124. Bords inférieurs de: 53. Voiles fracturables,
- l'évidement,: 54. Rebord annulaire du boîtier,
- 13. Collerette d'appui,: 55. Nervures,
- 14. Réservation,: 56. Rainures,
- 15. Rainures,: 57. Protubérances,
- 20. Prise Mâle,: 58. Butées,
- 201. Tête de la prise mâle,: 59. Ouverture du boîtier,
- 202. Corps de la prise mâle,: 60. Couvercle,
- 21. Second connecteur électrique,: 70. Faux plafond,
- 22. Canal,: 71. Plafond,
- 23. Assiette de fixation: A. Axe,
- 30. Logement,: h. Hauteur de l'évidement,
- 31. Epaulement,: H. Hauteur de la cavité.

## Revendications

1. Dispositif (1) de connexion comprenant :
- une prise femelle (10) destinée à être installée dans un plafond (71), la prise femelle (10) comprenant une cavité (12) présentant un fond (120) recevant un premier connecteur électrique (11) destiné à être relié au moins indirectement à un réseau électrique,
- une prise mâle (20) comprenant un second connecteur électrique (21) et présentant une forme complémentaire à la cavité (12) de la prise femelle, configurée pour venir en prise de manière amovible dans la partie femelle (10), la prise mâle (20) pouvant passer d'une position déverrouillée dans laquelle la prise mâle (20) peut être insérée dans la prise femelle (10), vers une position verrouillée dans laquelle la prise mâle (20) est solidaire de la prise femelle (10) et le second connecteur électrique (21) coopère axialement avec le premier connecteur électrique (11),
- un conducteur électrique (40) comprenant une première extrémité (41) reliée au second connecteur électrique (21), et une autre extrémité (42) configurée pour être connectée à un dispositif électrique, le conducteur électrique s'étendant au travers de la prise mâle (20),
**caractérisé en ce que** le second connecteur électrique (21) comprend des moyens agencés pour reprendre le poids du dispositif électrique.

2. Dispositif (1) de connexion comprenant :
- une prise femelle (10) destinée à être installée dans un plafond (71), la prise femelle (10) comprenant une cavité (12) présentant un fond (120) recevant un premier connecteur électrique (11) destiné à être relié au moins indirectement à un réseau électrique,
- une prise mâle (20) comprenant un second connecteur électrique (21) et présentant une forme complémentaire à la cavité (12) de la prise femelle, configurée pour venir en prise de manière amovible dans la partie femelle (10), la prise mâle (20) pouvant passer d'une position déverrouillée dans laquelle la prise mâle (20) peut être insérée dans la prise femelle (10), vers une position verrouillée dans laquelle la prise mâle (20) est solidaire de la prise femelle (10) et le second connecteur électrique (21) coopère axialement avec le premier connecteur électrique (11),
- un conducteur électrique (40) comprenant une première extrémité (41) reliée au second connecteur électrique (21), et une autre extrémité (42) configurée pour être connectée à un dispositif électrique, le conducteur électrique s'étendant au travers de la prise mâle (20),
**caractérisé en ce que** la prise mâle (20) est monobloc et présente une forme en T, le corps du T étant de forme cylindrique et la tête du T présentant une forme sensiblement oblongue.

3. Dispositif (1) de connexion selon la revendication 2, dans lequel le second connecteur électrique (21) est disposé sur le dessus de la tête du T de la prise mâle (20).

4. Dispositif (1) de connexion selon la revendication 2, dans lequel le second connecteur électrique (21) est disposé sur l'un des côtés de la tête du T de la prise mâle (20).

5. Dispositif (1) selon la revendication 1 ou 2, dans lequel la prise mâle (20) et le conducteur électrique (40) sont deux éléments distincts, le conducteur électrique (40) étant emboité dans la prise mâle (20).

6. Dispositif (1) de connexion selon l'une quelconque des revendications 1 à 5, dans lequel les moyens pour reprendre le poids du dispositif électrique comprennent un logement (30) ménagé dans la prise mâle (20) et configuré pour recevoir le second connecteur électrique (21), le logement (30) comprenant un épaulement (31) agencé pour reprendre le poids du dispositif électrique.

7. Dispositif (1) de connexion selon l'une quelconque des revendications 1 à 6, dans lequel le second connecteur électrique (21) présente une forme complémentaire de l'épaulement, de manière que le second connecteur électrique (21) appuie sur l'épaulement (31) du logement (30) et reprenne le poids du dispositif électrique.

8. Dispositif (1) de connexion selon l'une quelconque des revendications 1 à 7, dans lequel le second connecteur électrique (21) est affleurant avec la surface de la prise mâle (20) de manière que le second connecteur électrique (21) est maintenu en contact avec le premier connecteur électrique (11) lorsque la prise mâle (20) est en position verrouillée.

9. Dispositif (1) de connexion selon l'une quelconque des revendications 1 à 8, dans lequel le second connecteur électrique (21) et le conducteur électrique (4) forment un élément monobloc.

10. Dispositif (1) de connexion selon l'une quelconque des revendications 1 à 9, dans lequel le second connecteur électrique (21) est libre en rotation au sein du logement (30).

11. Dispositif (1) de connexion selon l'une quelconque des revendications 1 à 10, comprenant des moyens pour mettre en prise la partie mâle (20) dans la partie femelle (10), tel qu'un système de fixation à baïonnette.

12. Dispositif (1) de connexion selon l'une quelconque des revendications 1 à 11, dans lequel la prise femelle (10) comprend des moyens de blocage de la prise mâle (20) dans la prise femelle (10) en position verrouillée.

13. Dispositif (1) de connexion selon l'une quelconque des revendications 1 à 12, dans lequel la prise mâle (20), la prise femelle (10) et le second connecteur électrique (21) sont réalisés en caoutchouc vulcanisé.

14. Dispositif (1) de connexion selon l'une quelconque des revendications 1 à 13, dans lequel la partie femelle (10) comprend au moins un dispositif électronique relié au réseau électrique indépendamment du premier connecteur électrique.

15. Dispositif (1) de connexion selon la revendication 14, dans lequel la partie femelle (10) comprend au moins un logement configuré pour recevoir ledit dispositif électronique.

16. Dispositif de connexion selon la revendication 14 ou 15, dans lequel le dispositif électronique est un moyen de communication sans fil.

17. Dispositif de connexion selon la revendication 14 ou 15, dans lequel le dispositif électronique est un détecteur de fumées.

18. Ensemble comprenant :
- un boîtier d'encastrement (50) destiné à être fixé à demeure dans un support, le boitier d'encastrement (50) comprenant :
- un corps (51) présentant un fond (52),
- des voiles (53) pour le passage de câbles électriques, disposés à proximité du fond (52),
- des nervures (55), formées sur la paroi extérieure du corps (51), pour rigidifier le boîtier d'encastrement (50),
- des moyens de blocage et de réglage, formés sur la face interne du corps (51), et configurés pour coopérer avec la prise femelle (10),
- une prise femelle (10) comprenant des rainures (15) formées sur sa paroi extérieure, agencées pour coopérer avec les moyens de réglage du boîtier d'encastrement (50) de manière à régler la position de la prise femelle par rapport au boîtier d'encastrement (50).

19. Ensemble selon la revendication 18, dans lequel les rainures (15) coopèrent avec les moyens de blocage du boîtier d'encastrement (50) de manière à maintenir en position la prise femelle par rapport au boîtier d'encastrement (50).

20. Ensemble selon la revendication 18 ou 19, dans lequel les moyens de blocage comprennent au moins une protubérance (57) configurée pour coopérer avec la prise femelle (10) du dispositif (1) de connexion.

21. Ensemble selon la revendication 17, dans lequel les moyens de réglage comprennent des rainures (56) formées sur la paroi interne du corps (51), destinées à coopérer avec la prise femelle (10) du dispositif (1) de connexion.

22. Kit de montage pour connecter un dispositif électrique sur un dispositif de connexion, comprenant un boîtier d'encastrement (50) destiné à être fixé à demeure dans un support mural, une prise femelle (10) destinée à être installée dans le boîtier d'encastrement (50), la prise femelle (10) comprenant des rainures (15) configurées pour coopérer avec les rainures (56) du boîtier d'encastrement (50) de manière à régler la position de la prise femelle (10) par rapport au boîtier d'encastrement (50), le kit de montage comprenant une prise mâle (20) configurée pour être montée à rotation et verrouillée dans la prise femelle (10) de façon à établir une connexion électrique entre la prise mâle (20) et la prise femelle (10) et que le second connecteur électrique (21) de la prise mâle (20) puisse reprendre le poids du dispositif électrique lorsque le kit est assemblé.

23. Kit de montage selon la revendication 22, dans lequel le dispositif électrique est un luminaire.

24. Kit de montage selon la revendication 22, dans lequel le dispositif électrique est un ventilateur.

25. Procédé de montage d'un kit de montage selon la revendication 22, comprenant les étapes suivantes :
- placer le boîtier d'encastrement (50) ;
- couler la dalle de béton formant le plafond ;
- tirer les fils électriques au travers du boîtier d'encastrement (50) ;
- brancher le premier connecteur (11) de la prise femelle (10) aux fils électriques ;
- insérer et bloquer la prise femelle (10) dans le boîtier d'encastrement (50) ;
- insérer et verrouiller la prise mâle (20) dans la prise femelle (10) de manière à faire coopérer le premier connecteur électrique (11) avec le second connecteur électrique (21).
